# EUROPÄISCHE PATENTSCHRIFT

(11) **EP 1 861 594 B1**
(45) Veröffentlichungstag und Bekanntmachung des Hinweises auf die Patenterteilung: **07.09.2016**
(21) Anmeldenummer: 05759964.9
(22) Anmeldetag: 11.07.2005
(51) Int. Cl.: F01N 13/18, F01N 3/28

(54) **VERFAHREN ZUM HERSTELLEN EINER ABGASFÜHRENDEN VORRICHTUNG, INSBESONDERE EINER FAHRZEUGABGASREINIGUNGSVORRICHTUNG**
METHOD FOR THE PRODUCTION OF AN EXHAUST GAS CONDUCTING DEVICE, ESPECIALLY AN EXHAUST GAS PURIFYING DEVICE FOR A VEHICLE
PROCEDE POUR PRODUIRE UN DISPOSITIF DE GUIDAGE DES GAZ D'ECHAPPEMENT, EN PARTICULIER UN DISPOSITIF DE PURIFICATION DE GAZ D'ECHAPPEMENT D'UN VEHICULE

(30) Priorität: 07.03.2005 DE 102005010267
(43) Veröffentlichungstag der Anmeldung: 05.12.2007
(73) Patentinhaber: Faurecia Emissions Control Technologies, Germany GmbH, 86154 Augsburg (DE)
(72) Erfinder: KRONER, Peter, 66482 Zweibrücken (DE)
(74) Vertreter: Prinz & Partner mbB
(86) Internationale Anmeldenummer: PCT/EP2005/007500
(87) Internationale Veröffentlichungsnummer: WO 2006/094534

(56) Entgegenhaltungen:
- EP-A- 1 344 911
- EP-A- 1 387 931
- WO-A-00/37781

## Beschreibung

Die Erfindung betrifft ein Verfahren zum Herstellen von abgasführenden Vorrichtungen, insbesondere Abgasreinigungsvorrichtungen, die jeweils ein Außengehäuse und einen im Außengehäuse geklemmten Einleger haben.

Die abgasführenden Vorrichtungen, um die es sich bei der Erfindung handelt, sind beispielsweise Schalldämpfer, insbesondere aber Abgasreinigungsvorrichtungen wie Katalysatoren und Dieselpartikelfilter.

In solchen Vorrichtungen sind gegen radialen Druck sehr empfindliche Einleger untergebracht, bislang handelt es sich dabei überwiegend um axial durchströmte Keramiksubstrate, die mit einem elastischen Ausgleichselement (z.B. in Form einer Matte) umwickelt sind. Diese Einleger werden, wenn möglich, nur durch radiale Klemmung im Außengehäuse in axialer und seitlicher Richtung gehalten. Dabei muss die Klemmung groß genug sein, damit im Fahrbetrieb durch den Gasdruck als auch durch Vibrationen keine Verschiebung des Einlegers relativ zum Außengehäuse in axialer Richtung zustande kommt. Auf der anderen Seite darf natürlich der radiale Druck nicht so groß sein, dass es zum Zerstören des Einlegers-kommt, insbesondere zum Zerstören des auf Druck empfindlichen Katalysatorsubstrats bzw. Dieselpartikelfiltersubstrats. Es sind nun Bestrebungen vorhanden, Einleger mit geringerer Masse zu verbauen, die sich im Fahrbetrieb schneller aufheizen. Solche Substrate bestehen beispielsweise aus einer wellpappeartigen Trägerstruktur, die mit Katalysatormaterial beschichtet ist.

Das Einbringen und Klemmen des Einlegers im Außengehäuse erfolgt bislang üblicherweise entweder durch Wickeln eines Blechmantels um den Einleger, durch Einschieben des Einlegers in ein Rohr mit oder ohne nachträgliches Kalibrieren oder Schließen von Schalen. Wenn die aufgebrachte Kraft zu groß ist, kann es zum Zerstören des Einlegers, das heißt bei Katalysatoren des Substrats, kommen.

Eine große Schwierigkeit beim Herstellen von Abgasreinigungsvorrichtungen besteht darin, dass zwischen dem Substrat und dem Außengehäuse das elastische Ausgleichselement, typischerweise die Lagermatte, vorgesehen ist, die für einen Druckausgleich und eine stetige Vorspannung sorgt. Der Nachteil dieser Lagermatte besteht jedoch darin, dass sie, nachdem sie zusammengedrückt wird, einem gewissen Setzungsvorgang unterworfen ist, man spricht von Relaxieren, so dass der über sie an das Substrat weitergegebene Druck abnimmt. Das Zurückfedern des Außengehäuses nach dem Einbringen und Klemmen führt ebenfalls dazu, dass der anfänglich aufgebrachte Druck auf das Substrat und damit die aufgebrachte Klemmkraft nachlässt. Weiterhin nimmt der Haltedruck der Lagermatte im Betrieb ab (z.B. durch Alterung). Dies führt dazu, dass man im Hinblick auf die spätere sichere Klemmung des Substrats im Außengehäuse sicherheitshalber das Außengehäuse noch mehr anfänglichen Druck auf den Einleger ausüben lässt, weshalb man bei einzelnen Substraten an die Grenzen der Stabilität geht.

Aus der EP-A-1 344 911 ist ein Verfahren zur Montage eines Einlegers bekannt, bei dem jeder Einleger vor der Montage auf seinen Zieldurchmesser zusammengedrückt und anschließend mit diesem Zieldurchmesser im entsprechend hergestellten Gehäuse montiert wird.

Aus der WO-A-00/37781 ist ein Katalysator bekannt, der in einem Gehäuse in Wickeltechnik montiert wird.

Aufgabe der Erfindung ist es, ein Verfahren vorzustellen, das auch bei sehr druckempfindlichen Einlegern für eine ausreichend sichere Klemmung im Außengehäuse bei minimalen Ausschußraten sorgt.

Dies wird gemäß einem ersten Aspekt der Erfindung durch ein Verfahren zum Herstellen von abgasführenden Vorrichtungen erreicht, insbesondere Abgasreinigungsvorrichtungen, die jeweils ein Außengehäuse mit einem darin geklemmten Einleger haben, gekennzeichnet durch folgende Schritte: Jeder Einleger wird in vorbestimmter Weise durch Ausübung eines Druckes an seinem Umfang einwärts verformt. Aus den dabei ermittelten Werten wird die Sollverformung jedes Einlegers, die zum Erreichen eines Solldrucks notwendig ist, bestimmt. Der Einleger wird in einem Außengehäuse montiert, dessen Innenabmessungen den Außenabmessungen des Einlegers bei der ermittelten Sollverformung entsprechen. Auf jeden Einleger wird an dessen Umfang ein einwärts wirkender, vorbestimmter Druck ausgeübt und die Sollverformung dadurch bestimmt, dass die elastische Verformung des Einlegers zumindest beim Erreichen des vorbestimmten Drucks gemessen wird, wobei der vorbestimmte, aufgebrachte Druck unterhalb des Solldrucks liegt und die Sollverformung aufgrund der Verformung bei der Beaufschlagung mit dem vorbestimmten Druck extrapoliert wird.

Gemäß einem zweiten Aspekt der Erfindung durch ein Verfahren zum Herstellen von abgasführenden Vorrichtungen erreicht, insbesondere Abgasreinigungsvorrichtungen, die jeweils ein Außengehäuse mit einem darin geklemmten Einleger haben, gekennzeichnet durch folgende Schritte: Jeder Einleger wird in vorbestimmter Weise durch Ausübung eines Druckes an seinem Umfang einwärts verformt. Aus den dabei ermittelten Werten wird die Sollverformung jedes Einlegers, die zum Erreichen eines Solldrucks notwendig ist, bestimmt. Der Einleger wird in einem Außengehäuse montiert, dessen Innenabmessungen den Außenabmessungen des Einlegers bei der ermittelten Sollverformung entsprechen. Bei dem Einleger wird durch Beaufschlagung mit einem einwärts wirkenden Druck eine vorbestimmte Verformung hervorgerufen und die Sollverformung dadurch bestimmt, dass zumindest der zum Erreichen der vorbestimmten Verformung nötige Druck auf den Einleger gemessen wird, wobei die vorbestimmte Verformung unterhalb der Sollverformung liegt und die Sollverformung aufgrund des bei der vorbestimmten Verformung ausgeübten Druckes extrapoliert wird.

Bei den bislang bekannten Verfahren wird mit einer stets konstanten, vorgegebenen Kraft das Außengehäuse um einen vorbestimmten Weg plastisch deformiert, unabhängig von der Belastbarkeit des gerade verbauten Einlegers. Die Erfindung geht einen anderen Weg, indem sie zuerst die tatsächlich notwendige Kompression des Einlegers, insbesondere der Lagermatte, bestimmt, um dann das Außengehäuse auf die Klemmkraft abzustimmen, die zum Erreichen der gewünschten Kompression notwendig ist. Indem der der aufgebrachte Druck vorzugsweise deutlich unterhalb des Solldrucks liegt, bietet gegenüber Verfahren, bei denen der Einleger bereits mit dem Solldruck beaufschlagt wird, den Vorteil, dass ein Druckverlust aufgrund von Mehrfachkompression der Lagermatte vermieden oder zumindest begrenzt wird. Diesbezüglich wurde nämlich festgestellt, dass die Matte bei jeder Kompression einem gewissen Setzungsvorgang, also einer plastischen Verformung, unterworfen ist, wodurch auch der durch die Matte ausgeübte Haltedruck abnimmt. Wird nun also die Lagermatte bereits vor dem Montieren des Außengehäuses (ggf. sogar mehrmals) mit dem Solldruck beaufschlagt und daraus die Sollverformung bestimmt, so ist eine spätere sichere Klemmung des Einlegers im Außengehäuse, das auf eben diese Sollverformung ausgelegt ist, unter Umständen nicht mehr gewährleistet, da der Haltedruck der Matte sich durch die Mehrfachkompression verringert hat. Ein ähnlicher Druckverlust tritt im Übrigen auch auf, wenn die Matte zur Kompensation einer möglichen Rückfederung des Außengehäuses "überkomprimiert", also über den Solldruck hinaus beaufschlagt wird. Wird jedoch nur ein deutlich unterhalb des Solldrucks liegender Druck auf den Einleger ausgeübt, der gerade ausreichend ist, um den (weiteren) Verlauf der Druck-Verformungs-Kennlinie mit hinreichender Genauigkeit extrapolieren zu können, lässt sich der beschriebene Effekt vermeiden oder zumindest stark verringern.

Bei dem erfindungsgemäßen Verfahren wird auf jeden Einleger eine seitliche, einwärts gerichtete Kraft und damit ein entsprechender Druck ausgeübt. Es wird also ein zunehmender Druck aufgebracht und zumindest währenddessen gemessen, wie stark sich der Einleger beim gerade ausgeübten Druck elastisch verformt. Da die elastische Verformung einlegerspezifisch ist, werden für jeden Einleger unterschiedliche Verformungswerte ermittelt werden. Die Sollverformung und damit der Solldruck kann dann auf zwei verschiedene Weisen ermittelt werden und ist ein vorbestimmter Druck, der, abhängig vom erforderlichen Haltedruck, mehr oder weniger knapp unterhalb des Druckwertes liegt, ab dem die Einleger plastisch deformiert und damit zerstört werden.

Grundsätzlich könnte zur Bestimmung der Sollverformung jeder mit dem Solldruck beaufschlagt werden, um dann sozusagen das "Einfedern" des Substrats, d.h. die Sollverformung und damit die Außenmaße des Einlegers zum Erreichen des Solldrucks festzulegen.

Nachdem die Sollverformung für den speziellen Einleger bestimmt wurde, können ohne besonderen Aufwand die entsprechenden Innenabmessungen des aufzubringenden Außengehäuses bestimmt werden.

Im abschließenden Verfahrensschritt wird darin das Außengehäuse mit denjenigen Innenabmessungen auf die vorgefertigte Einheit aufgebracht, die den Außenabmessungen des Einlegers bei ermittelter Sollverformung entsprechen. Es wird also, mit anderen Worten, mit der Meßvorrichtung, über die der Druck aufgebracht wird, der spätere Druck des Außengehäuses simuliert, und anschließend wird erst das Außengehäuse abhängig von den Meßwerten maßgerecht erzeugt oder ausgewählt.

Erfindungsgemäß ist dabei vorgesehen, dass der vorbestimmte aufgebrachte Druck unterhalb des zu erzielenden Solldrucks liegt. Die Sollverformung, die zum Erreichen dieses Solldrucks nötig ist, wird dann in einer Steuerung ermittelt. Dies erfolgt dadurch, dass die beim Aufbringen des Drucks gemessene Verformung des Einlegers extrapoliert wird, um zur Sollverformung zu kommen. Dabei kann die Verformung stetig mit zunehmendem Druck gemessen werden. Alternativ kann sie natürlich auch nur bei einigen bestimmten Druckwerten gemessen werden, um dann anschließend zu extrapolieren.

Erfindungsgemäß ist alternativ vorgesehen, bei dem Einleger durch Beaufschlagung mit einem einwärts wirkenden Druck eine vorbestimmte Verformung hervorzurufen und die Sollverformung dadurch zu bestimmen, dass zumindest der zum Erreichen der vorbestimmten Verformung nötige Druck auf den Einleger gemessen wird. Bei dieser vorbestimmten Verformung kann es sich um eine Verformung um einen bestimmten Betrag (d.h. der innerhalb gewisser Grenzen variable Durchmesser jedes Einlegers wird um einen konstanten, vorher festgelegten Wert verringert) oder aber um eine Verformung auf einen vorbestimmten Wert, nämlich einen vorher festgelegten Durchmesser, handeln. Unter einer Messung des Druckes ist in diesem Zusammenhang selbstverständlich auch eine Messung der benötigten Kraft, beispielsweise mit Hilfe einer Kraftmeßdose, zu verstehen, von der dann (unter Berücksichtigung der Fläche der Kraftmeßdose) unmittelbar auf den Druck geschlossen werden kann. Auch hier ist vorgesehen, dass die vorbestimmte Verformung unterhalb der Sollverformung liegt und die Sollverformung aufgrund des bei der vorbestimmten Verformung ausgeübten Druckes extrapoliert wird. Die vorbestimmte Verformung ist dabei möglichst gering zu wählen; vorteilhaft ist sie gerade groß genug, um eine hinreichend genaue Extrapolation des Druck-Verformungs-Verhaltens des speziellen Einlegers zu ermöglichen. So wird zum einen eine Beschädigung des empfindlichen Einlegers verhindert, zum anderen wird der bereits im Zusammenhang mit dem druckgesteuerten Verfahren erläuterte Druckverlust durch Mehrfachkompression der Lagermatte vermieden oder zumindest begrenzt. Bei der Bestimmung der zu erreichenden Verformung können verschiedene Parameter herangezogen werden, unter anderem ist hierbei die Kompression der Lagermatte zu berücksichtigen. Wird beispielsweise ein Einleger mit rundem Querschnitt auf einen vorbestimmten Durchmesser verformt, so läßt sich dieser Durchmesser als Summe aus dem Substratdurchmesser und der zweifachen Dicke der unverpreßten Matte berechnen, abzüglich einer für alle Bauteile einer Serie gültigen Konstante.

Um die spätere Klemmung des Einlegers im Außengehäuse weiter zu optimieren, können bei der Extrapolation weitere Parameter berücksichtigt werden. Insbesondere sind hier die z.B. bei gewickelten Gehäusen auftretende Rückfederung des Außengehäuses nach dem Schließvorgang bzw. die nach der Montage auftretende Aufweitung des Gehäuses (im Falle eines vorgefertigten zylindrischen Außengehäuses, in das der Einleger eingeschoben wird) zu nennen. Auch die Isolationswirkung des Ausgleichselements ändert sich in Abhängigkeit von der Kompression und sollte daher in die Berechnung eingehen. Weiterhin ist es vorteilhaft, die bei (im Betrieb der Abgasreinigungsvorrichtung unvermeidlichen) Temperaturänderungen auftretende Formänderung des Außengehäuses zu berücksichtigen; gerade Gehäuse mit unrundem Querschnitt neigen dazu, "rund zu werden". Wird diese Tendenz bereits bei der Bestimmung des individuell maßgeschneiderten Außengehäuses für den jeweiligen Einleger einkalkuliert, indem beispielsweise ein ovales Gehäuse etwas länglicher ausgeführt wird, können lokale Druckspitzen in den Bereichen mit kleinerem Radius vermieden werden. Auf diese Weise ergibt sich eine geringere Substratbelastung, was weniger Ausschuß und eine bessere Dauerhaltbarkeit zur Folge hat.

Wie zuvor schon erläutert, ist der Einleger vorzugsweise eine vorgefertigte Einheit mit einem gasdurchströmten Substrat und einem das Substrat umfangsmäßig umgebenden elastischen Ausgleichselement, insbesondere einer Lagermatte.

Die Vorrichtung, die durch das erfindungsgemäße Verfahren hergestellt wird, ist gemäß der bevorzugten Ausführungsform ein Abgaskatalysator oder ein Dieselpartikelfilter, die beide mit einem labilen Substrat als Kern des Einlegers versehen sind.

Der auf den Einleger ausgeübte Druck ist normalerweise radial einwärts gerichtet, wobei es hierbei natürlich auch auf die Form des Außengehäuses ankommt. Dieses muß, wie bereits angedeutet, nicht kreiszylindrisch im Querschnitt sein, sondern kann auch unrund ausgeführt werden.

Obwohl es technisch möglich ist, mit nur einem Druckbacken zu arbeiten, der gegen den Einleger mit dem vorbestimmten Druck gepreßt wird, sind vorzugsweise mindestens drei Druckbacken vorhanden. Diese werden relativ zum Einleger bewegt.

Wenigstens ein Meßpunkt zur Bestimmung des Verfahrweges und/oder des aufgebrachten Druckes ist vorgesehen. Der Verfahrweg ist der Weg, den der entsprechende Druckbacken von der ersten Kontaktierung des Einlegers bis zum Aufbringen des gewünschten vorgegebenen Druckes zurücklegt. Über den Verfahrweg werden dann die Innenabmessungen des Außengehäuses bestimmt. Alternativ kann, wie bereits erläutert, auch der Verfahrweg vorgegeben sein, der ja gerade die Verformung des Einlegers festlegt, und der zugehörige Druck gemessen werden.

Das Gehäuse ist insbesondere als Blechgehäuse ausgeführt.

Das erfindungsgemäße Verfahren kann auf sämtliche bislang bekannten Verfahren zum Herstellen abgasführender Vorrichtungen angewandt werden.

Ein erstes Verfahren ist das sogenannte Wickeln, bei dem ein plattenförmiger Blechabschnitt um den Einleger gewickelt und anschließend ab Erreichen der vorbestimmten Innenabmessungen an seinen Rändern befestigt und geschlossen wird.

Ein zweites Verfahren ist das Kalibrieren, bei dem von außen am Umfang des vorgefertigten Rohres gegen dieses gedrückt wird, um es plastisch zu deformieren und gegen den Einleger zu pressen.

Ein drittes Verfahren sieht ein Gehäuse aus mehreren Schalen vor, die gegen den Einleger gepreßt und anschließend aneinander befestigt werden.

Eine vierte Ausführungsform sieht ein sogenanntes Stopfverfahren vor. Hierbei werden mehrere zylindrische Gehäuse mit unterschiedlichen Innenabmessungen vorgefertigt. Im dritten Verfahrensschritt wird ja zuvor die Innenabmessung des Gehäuses ermittelt, die für den gewünschten Druck sorgt. Anschließend kann dann das Gehäuse mit den entsprechenden Maßen verwendet werden, um stirnseitig den Einleger in das Gehäuse einzuschieben. Alternativ kann das Gehäuse mit dem in der Druck- bzw. Wegmessung und Berechnung ermittelten optimalen Durchmesser speziell angefertigt werden.

Das erfindungsgemäße Verfahren ist insbesondere auf Einleger gerichtet, auf die ein Solldruck von maximal 7 bar, vorzugsweise sogar von unter 3,9 bar ausgeübt wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch eine durch die Erfindung hergestellte Vorrichtung in Form einer Abgasreinigungsvorrichtung,
- Figur 2 eine schematische Ansicht eines beim erfindungsgemäßen Verfahren verwendeten Meßwerkzeugs;
- Figur 3 ein Druck-Verfahrweg-Diagramm, das für das erfindungsgemäße Verfahren charakteristisch ist;
- Figur 4 eine perspektivische Ansicht eines beim erfindungsgemäßen Verfahren eingesetzten Kalibrier-Werkzeugs, teilweise im Schnitt;
- Figur 5 eine stirnseitige Ansicht einer durch das erfindungsgemäße Verfahren hergestellten Vorrichtung, wobei das Außengehäuse gewickelt ist;
- Figur 6 eine stirnseitige Ansicht einer durch das erfindungsgemäße Verfahren hergestellten Vorrichtung mit einem aus Schalen hergestellten Außengehäuse; und
- Figur 7 eine Prinzipskizze, die das beim erfindungsgemäßen Verfahren alternativ angewandte Stopfen zeigt.

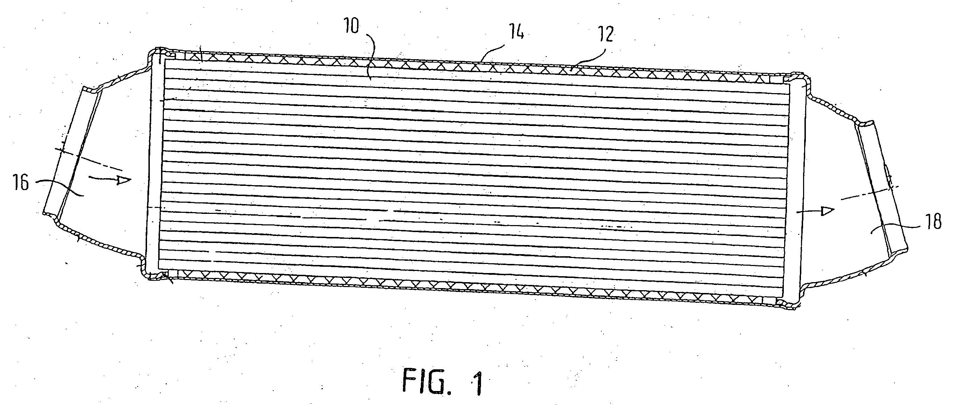

In Figur 1 ist eine in einem Kraftfahrzeug untergebrachte abgasführende Vorrichtung in Form einer Fahrzeugabgasreinigungsvorrichtung dargestellt. Die Fahrzeugabgasreinigungsvorrichtung ist entweder ein Abgaskatalysator oder ein Dieselpartikelfilter oder eine Kombination aus beiden.

Kernstück der Abgasreinigungsvorrichtung ist ein langgestrecktes, zylindrisches Substrat 10, das beispielsweise aus einem keramischen Substrat oder einer Art gewickelter Wellpappe oder einem anderen katalytischen Träger- oder Filtermaterial mit oder ohne Beschichtung besteht. Das Substrat 10 kann einen kreiszylindrischen Querschnitt oder einen unrunden Querschnitt aufweisen. Nur zur vereinfachten Darstellung ist in den Figuren ein kreiszylindrischer Querschnitt dargestellt. Das Substrat ist von einer Lagermatte 12 umgeben, die als elastisches Ausgleichselement zwischen dem Substrat 10 und einem Außengehäuse 14 wirkt. Das Außengehäuse 14 ist sehr dünnwandig ausgeführt und insbesondere aus Blech. Stromaufwärts und stromabwärts sind mit dem Außengehäuse 14 ein Einströmtrichter 16 bzw. ein Ausströmtrichter 18 verbunden.

Das Substrat 10 bildet zusammen mit der Lagermatte 12 eine vorgefertigte Einheit, die im folgenden als Einleger bezeichnet wird.

Im Betrieb strömt Abgas über den Einlaßtrichter 16 stirnseitig in das Substrat 10 ein und verläßt mit weniger Schadstoffen versehen schließlich das Substrat 10 an der gegenüberliegenden Stirnseite, um über den Auslaßtrichter 18 die Reinigungsvorrichtung zu verlassen.

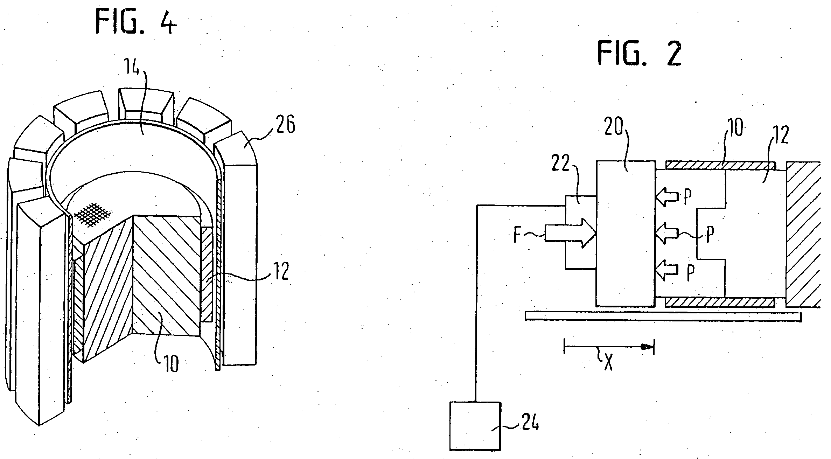

Die Herstellung der Reinigungsvorrichtung wird im folgenden anhand der Figuren 2 bis 4 erläutert.

In Figur 2 ist eine Meßvorrichtung gezeigt, in der bei der Serienproduktion vor dem sogenannten "Canning", also dem Montieren des Einlegers im Außengehäuse 14, die Nachgiebigkeit jedes einzelnen zu verbauenden Einlegers bestimmt wird. Dazu wird der Einleger in die Vorrichtung eingelegt und durch mindestens einen Druckbacken 20, vorzugsweise drei am Umfang verteilte Druckbacken, radial einwärts zunehmend belastet. Mit den Druckbacken 20 sind Kraftmeßdosen 22 gekoppelt, die die aufgebrachte Kraft F ständig abtasten. Über die Kraft F läßt sich dann auch der auf den Einleger seitlich am Umfang einwärts wirkende Druck bestimmen.

Die auf den Einleger aufgebrachte Kraft F wird stetig gesteigert bis zum Erreichen eines vorbestimmten Druckes. Während des Verfahrens der Druckbacken 20 wird punktuell oder stetig auch die Verfahrstrecke parallel zum Druck aufgenommen. Von der Kontaktierung der Lagermatte 12 bis zur Stellung des Druckbackens 20 bei Erreichen des vorbestimmten Drucks wird beispielsweise ein Verfahrweg X ermittelt. Der vorbestimmte Druck kann dabei der der Sollverformung entsprechende Solldruck sein, mit dem dann später der Einleger im Außengehäuse 14 geklemmt sein sollte.

Vorzugsweise wird man jedoch, wie zuvor schon einmal erläutert, deutlich unterhalb des Solldruckes p_{S} das Meßverfahren beenden und dazu bis zu dem vorgegebenen, niedrigeren vorbestimmten Druck p₀ die Druckbacken 20 zufahren, um über die bis dahin ermittelten Meßparameter auf den Verfahrweg X_{A} (und somit die nötige Sollverformung) zur Erreichung des Solldruckes p_{S} hochzurechnen. Hierzu ist die Meßvorrichtung mit einer entsprechenden Steuerung 24 gekoppelt.

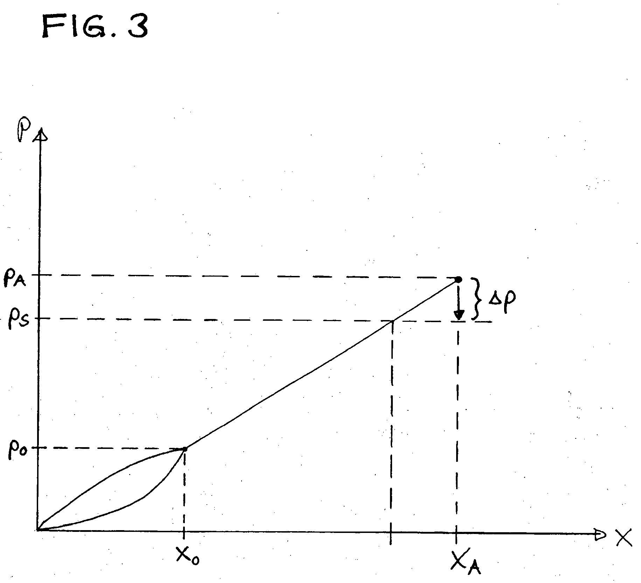

Figur 3 zeigt schematisch den Verlauf des auf den Einleger ausgeübten Druckes p in Abhängigkeit vom (tatsächlichen oder berechneten) Verfahrweg X. Wie bereits erwähnt, wird auf den Einleger durch die Druckbacken 20 nur der Druck p₀ ausgeübt, der einem Verfahrweg X₀ der Druckbacken 20 entspricht. Der Wert p₀ wird zuvor in Abhängigkeit von den für den Einleger verwendeten Materialien festgelegt und ist für alle Bauteile einer Serie konstant. Während des Zufahrens der Druckbacken werden mehrere Meßwerte für den Druck p in Abhängigkeit vom Verfahrweg X an die Steuerung 24 übergeben. Aus diesen für jeden Einleger spezifischen Meßwerten wird der weitere Verlauf der Druck-Verfahrweg-Kennlinie für den jeweiligen Einleger extrapoliert. Dabei wird auch die spätere Rückfederung des Außengehäuses 14 sowie evtl. weitere Parameter berücksichtigt, weshalb der Solldruck p_{S} (rechnerisch) um einen Betrag Δp erhöht wird. Auf diese Weise gelangt man zu dem durch das Außengehäuse 14 aufzubringenden Druck p_{A}, der einem Verfahrweg X_{A} entspricht. Dieser Verfahrweg X_{A} legt die Sollverformung des Außengehäuses 14 fest.

Zur Extrapolation der Druck-Verfahrweg-Kennlinie kann anstelle des Druckes p₀ auch der Verfahrweg X₀ der Druckbacken 20 für die jeweilige Serie auf einen konstanten Wert festgelegt werden, wobei wiederum beim Zufahren der Druckbacken 20 der Druck p in Abhängigkeit vom Verfahrweg X gemessen und an die Steuerung übermittelt wird.

Nach dem Auseinanderfahren der Druckbacken 20 wird der Einleger der Vorrichtung entnommen und in eine weitere Vorrichtung gelegt, in der dann das Außengehäuse 14 aufgebracht wird.

Ein Beispiel für eine solche Vorrichtung ist die in Figur 4 gezeigte Kalibrier-Vorrichtung. Diese umfaßt zahlreiche kreissegmentförmige, radial bewegliche Backen 26, die sich zu einem Ring schließen können. Ins Innere des durch die Backen 26 umschriebenen Arbeitsraums wird das kreiszylindrische, rohrförmige Außengehäuse 14 gelegt, in welches der Einleger axial eingeschoben ist. Die Backen 26 werden anschließend radial nach innen verfahren, wobei die zuvor in der Steuerung 24 abgelegten Werte bezüglich des Verfahrweges X_{A} herangezogen werden. Das bedeutet, die durch die Steuerung 24 zuvor ermittelten gewünschten Außenabmessungen des Einlegers werden durch eine weggesteuerte Bewegung der Backen 26 unter gleichzeitiger plastischer Verformung des Außengehäuses 14 erreicht. Voraussetzung ist natürlich, daß der Einleger vor der Verformung annähernd spielfrei im Außengehäuse 14 positioniert war oder das Spiel bei der Verformung mitberücksichtigt wurde. Der durch das plastisch verformte Außengehäuse 14 auf den Einleger aufgebrachte Druck entspricht damit (nach erfolgter Rückfederung) dem Solldruck p_{S}.

Anstatt der in Figur 4 gezeigten Backen 26 kann das Kalibrieren auch mittels Rollen erfolgen, die gegen das Außengehäuse mit darin vorgesehenem Einleger seitlich um den vorbestimmten Verfahrweg X_{A} gedrückt und gedreht werden. Auch ein sogenanntes Drücken ist in diesem Zusammenhang möglich, bei dem das Außengehäuse 14 mit darin angeordnetem Einleger relativ um den vorbestimmten Verfahrweg X_{A} gegen eine einzelne Rolle bewegt wird und anschließend eine Relativdrehung zwischen der Rolle und dem Außengehäuse samt Einleger erfolgt, so daß sich die Rolle umfangsmäßig in das Außengehäuse drückt und dieses plastisch um den Verfahrweg X_{A} nach innen deformiert.

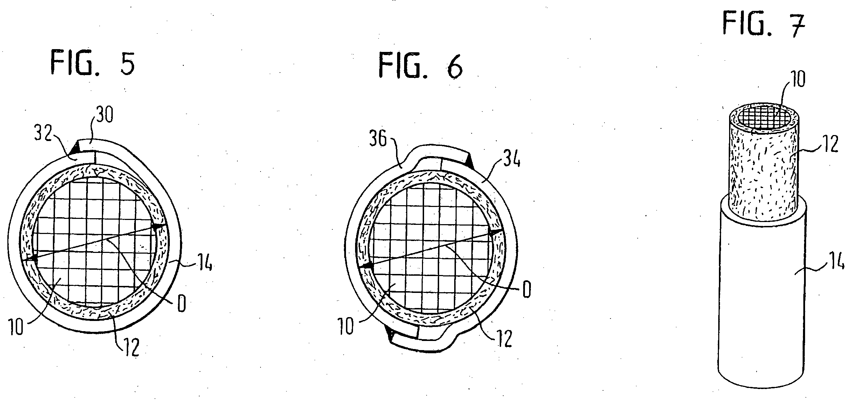

Neben dem Kalibrieren kann auch ein Wickeln des Außengehäuses 14 erfolgen, wie es in Figur 5 anhand des fertigen Produkts einfach dargestellt ist. Dabei wird ein Blechstreifen um den Einleger gewickelt. Der Blechstreifen bildet dann das Außengehäuse 14. Die sich überlappenden Ränder 30, 32 werden miteinander verschweißt, und zwar nachdem sie soweit übereinander geschoben wurden, daß die Innenabmessung auf der Innenseite des entstehenden Außengehäuses 14 den Außenabmessungen des Einlegers entsprechen, wie sie zuvor mit der Meßvorrichtung ermittelt wurden. Im vorliegenden Fall sind die Außenabmessungen und die Innenabmessungen der Außendurchmesser D des bei Solldruck komprimierten Einlegers auf der Außenseite der Lagermatte 12, evtl. verringert um einen dem Wert Δp entsprechenden Betrag, um die Rückfederung des verschweißten Außengehäuses 14 zu kompensieren.

Auch beim Wickeln wird das Blech für das Außengehäuse 14 weggesteuert deformiert.

Die in Figur 6 gezeigte Ausführungsform arbeitet mit zwei oder mehreren Schalen 34, 36, die ineinandergeschoben werden. Auch hier werden die Schalen 34, 36 weggesteuert soweit ineinander geschoben, bis die Innenabmessungen den Außenabmessungen (hier dem Außendurchmesser D) des Einlegers entsprechen. Die Schalen 34, 36 werden dann z. B. aneinandergeschweißt, gefalzt oder gelötet. Auch hier ist wiederum eine Rückfederungs- bzw. Aufweitungskompensation mit einzurechnen.

Figur 7 zeigt schematisch das sogenannte Stopfen. In der Meßeinrichtung werden die gewünschten Außenabmessungen des Einlegers ermittelt. Anschließend wird ein zylindrisches, rohrförmiges Außengehäuse 14 mit dem gewünschten Durchmesser hergestellt. Dieses Kalibrieren kann in einem oder mehreren Arbeitsschüben oder in einem kontinuierlichen Prozeß (z.B. Walzen) erfolgen. Anschließend wird der Einleger axial in das ausgewählte Außengehäuse 14 gestopft. Hierbei sind natürlich entsprechende trichterförmige Hilfsmittel oder Hilfsmittel zur radialen Vorkompression vorgesehen. Die beim Stopfverfahren erfolgende Aufweitung des Außengehäuses 14 wird analog zu dem für die Rückfederung beschriebenen Vorgehen bei der Bestimmung der Sollverformung kompensiert.

Durch das erwähnte Verfahren können Substrate 10 verbaut werden, die sehr fragil sind. Es wird mit auf die Einleger ausgeübten Solldrücken von maximal 7 bar, vorzugsweise sogar unter 3,9 bar gearbeitet.

Zu betonen ist, daß das dargestellte Verfahren nicht etwa für Versuchszwecke gedacht ist, bei denen ein einzelner Katalysator oder Dieselpartikelfilter hergestellt wird. Vielmehr ist das Verfahren gerade für die Massenfertigung gedacht, bei der jedes einzelne Substrat samt Lagermatte bzw. der entsprechende Einleger zuvor auf Druck belastet und gemessen wird.

## Patentansprüche

1. Verfahren zum Herstellen von abgasführenden Vorrichtungen, insbesondere Abgasreinigungsvorrichtungen, die jeweils ein Außengehäuse mit einem darin geklemmten Einleger haben, **gekennzeichnet durch** folgende Schritte:
a) jeder Einleger wird in vorbestimmter Weise **durch** Ausübung eines Druckes an seinem Umfang einwärts verformt,
b) aus den dabei ermittelten Werten wird die Sollverformung jedes Einlegers, die zum Erreichen eines Solldrucks notwendig ist, bestimmt,
c) der Einleger wird in einem Außengehäuse (14) montiert, dessen Innenabmessungen den Außenabmessungen (D) des Einlegers bei der ermittelten Sollverformung entsprechen;
d) wobei auf jeden Einleger an dessen Umfang ein einwärts wirkender, vorbestimmter Druck ausgeübt und die Sollverformung **dadurch** bestimmt wird, daß die elastische Verformung des Einlegers zumindest beim Erreichen des vorbestimmten Drucks gemessen wird, wobei der vorbestimmte, aufgebrachte Druck unterhalb des Solldrucks liegt und die Sollverformung aufgrund der Verformung bei der Beaufschlagung mit dem vorbestimmten Druck extrapoliert wird.

2. Verfahren zum Herstellen von abgasführenden Vorrichtungen, insbesondere Abgasreinigungsvorrichtungen, die jeweils ein Außengehäuse mit einem darin geklemmten Einleger haben, **gekennzeichnet durch** folgende Schritte:
a) jeder Einleger wird in vorbestimmter Weise **durch** Ausübung eines Druckes an seinem Umfang einwärts verformt,
b) aus den dabei ermittelten Werten wird die Sollverformung jedes Einlegers, die zum Erreichen eines Solldrucks notwendig ist, bestimmt,
c) der Einleger wird in einem Außengehäuse (14) montiert, dessen Innenabmessungen den Außenabmessungen (D) des Einlegers bei der ermittelten Sollverformung entsprechen;
d) wobei bei dem Einleger **durch** Beaufschlagung mit einem einwärts wirkenden Druck eine vorbestimmte Verformung hervorgerufen und die Sollverformung **dadurch** bestimmt wird, daß zumindest der zum Erreichen der vorbestimmten Verformung nötige Druck auf den Einleger gemessen wird, wobei die vorbestimmte Verformung unterhalb der Sollverformung liegt und die Sollverformung aufgrund des bei der vorbestimmten Verformung ausgeübten Druckes extrapoliert wird.

3. Verfahren nach Anspruch 1 oder Anspruch 2, **dadurch gekennzeichnet, daß** bei der Extrapolation mindestens einer der folgenden Parameter berücksichtigt wird: Rückfederung des Gehäuses, Aufweitung des Gehäuses, Formänderung des Gehäuses bei Temperaturänderungen, Änderung der Isolationswirkung des Ausgleichselements in Abhängigkeit von der Kompression.

4. Verfahren nach einem der vorhergehenden Ansprüche, **dadurch gekennzeichnet, daß** der Einleger eine vorgefertigte Einheit mit einem gasdurchströmten Substrat (10) und einem das Substrat (10) umfangsmäßig umgebenden elastischen Ausgleichselement ist.

5. Verfahren nach einem der vorhergehenden Ansprüche, **dadurch gekennzeichnet, daß** die Vorrichtung ein Abgaskatalysator oder ein Dieselpartikelfilter oder eine Kombination aus beiden ist.

6. Verfahren nach einem der vorhergehenden Ansprüche, **dadurch gekennzeichnet, daß** der auf den Einleger ausgeübte Druck radial einwärts gerichtet ist.

7. Verfahren nach einem der vorhergehenden Ansprüche, **dadurch gekennzeichnet, daß** wenigstens eine, vorzugsweise wenigstens drei Druckbacken (20) relativ zum Einleger bewegt werden, um den gewünschten Druck bzw. die gewünschte Verformung in einer Meßvorrichtung auf den Einleger auszuüben.

8. Verfahren nach einem der vorhergehenden Ansprüche, **dadurch gekennzeichnet, daß** die Geometrie des Außengehäuses (14) weggesteuert so verändert wird, daß es mit dem Solldruck den Einleger im Außengehäuse (14) klemmt.

9. Verfahren nach einem der vorhergehenden Ansprüche, **dadurch gekennzeichnet, daß** als Außengehäuse (14) ein Blechgehäuse verwendet wird.

10. Verfahren nach einem der vorhergehenden Ansprüche, **dadurch gekennzeichnet, daß** das Außengehäuse (14) durch Wickeln um den Einleger erzeugt wird.

11. Verfahren nach einem der Ansprüche 1 bis 9, **dadurch gekennzeichnet, daß** das Außengehäuse (14) durch Kalibrieren gegen den Einleger gepreßt wird.

12. Verfahren nach einem der Ansprüche 1 bis 9, **dadurch gekennzeichnet, daß** das Außengehäuse (14) aus mehreren Schalen (34, 36) besteht, die gegen den Einleger gepreßt und aneinander befestigt werden.

13. Verfahren nach einem der Ansprüche 1 bis 9, **dadurch gekennzeichnet, daß** der Einleger in ein vorgefertigtes zylindrisches Außengehäuse (14) geschoben wird, dessen Innenabmessungen den ermittelten Außenabmessungen des Einlegers entsprechen.

14. Verfahren nach Anspruch 13, **dadurch gekennzeichnet, daß** das Außengehäuse auf den gewünschten Durchmesser kalibriert wird.

15. Verfahren nach einem der vorhergehenden Ansprüche, **dadurch gekennzeichnet, daß** der auf den Einleger ausgeübte Solldruck maximal 7 bar, vorzugsweise maximal 3,9 bar, beträgt.

## Claims

1. A method of fabricating exhaust gas handling devices, in particular emission control devices, each having an outer housing with an insert clamped in place therein, **characterized by** the following steps:
(a) deforming each insert inwards in a predetermined manner by exerting a pressure at its circumference,
(b) determining, from the values ascertained therein, the required deformation of each insert necessary for attaining a set pressure,
(c) fitting the insert in an outer housing (14) the internal dimensions of which correspond to the external dimensions (D) of the insert with the required deformation ascertained;
(d) a predetermined pressure acting inwards being exerted on each insert at its circumference and the required deformation being determined in that the elastic deformation of the insert is measured at least on attaining the predetermined pressure, the predetermined pressure applied being lower than the set pressure and the required deformation being extrapolated based on the deformation upon application of the predetermined pressure.

2. A method of fabricating exhaust gas handling devices, in particular emission control devices, each having an outer housing with an insert clamped in place therein, **characterized by** the following steps:
(a) deforming each insert inwards in a predetermined manner by exerting a pressure at its circumference,
(b) determining, from the values ascertained therein, the required deformation of each insert necessary for attaining a set pressure,
(c) fitting the insert in an outer housing (14) the internal dimensions of which correspond to the external dimensions (D) of the insert with the required deformation ascertained;
(d) a predetermined deformation of the insert being caused by application of a pressure acting inwards and the required deformation being determined in that at least the pressure, necessary for attaining the predetermined deformation, on the insert is measured, the predetermined deformation being below the required deformation and the required deformation being extrapolated based on the pressure exerted in the predetermined deformation.

3. The method as set forth in claim 1 or claim 2, **characterized in that** at least one of the following parameters is taken into account in extrapolation: resiliency of the housing, expansion of the housing, change in shape of the housing upon changes in temperature, change in the insulating effect of the compensating element as a function of the compression.

4. The method as set forth in any of the preceding claims, **characterized in that** the insert is a prefabricated unit having a gas-permeable substrate (10) and an elastic compensating element surrounding the circumference of the substrate (10).

5. The method as set forth in any of the preceding claims, **characterized in that** the device is an exhaust gas catalytic converter or a diesel particulate filter or a combination of both.

6. The method as set forth in any of the preceding claims, **characterized in that** the pressure exerted on the insert is directed radially inwards.

7. The method as set forth in any of the preceding claims, **characterized in that** at least one, preferably at least three pressure jaws (20) are moved relative to the insert to exert the desired pressure or the desired deformation on the insert in a measuring device.

8. The method as set forth in any of the preceding claims, **characterized in that** the geometry of the outer housing (14) is changed in a displacement-controlled manner such that it clamps the insert in place in the outer housing (14) at the set pressure.

9. The method as set forth in any of the preceding claims, **characterized in that** a sheet metal housing is used as the outer housing (14).

10. The method as set forth in any of the preceding claims, **characterized in that** the outer housing (14) is produced by wrapping about the insert.

11. The method as set forth in any of claims 1 to 9, **characterized in that** the outer housing (14) is pressed against the insert by calibrating.

12. The method as set forth in any of claims 1 to 9, **characterized in that** the outer housing (14) consists of a plurality of shells (34, 36) which are pressed against the insert and secured to each other.

13. The method as set forth in any of claims 1 to 9, **characterized in that** the insert is pushed into a prefabricated cylindrical outer housing (14) the internal dimensions of which correspond to the outer dimensions of the insert as ascertained.

14. The method as set forth in claim 13, **characterized in that** the outer housing is calibrated to the desired diameter.

15. The method as set forth in any of the preceding claims, **characterized in that** the set pressure exerted on the insert amounts to 7 bars max., preferably 3.9 bars max..

## Revendications

1. Procédé de fabrication de dispositifs conducteurs de gaz d'échappement, en particulier de dispositifs d'épuration de gaz d'échappement, comportant chacun un boîtier extérieur qui présente une pièce d'insert serrée dans celui-ci, **caractérisé par** les étapes suivantes :
a) chaque pièce d'insert est déformée vers l'intérieur de manière prédéterminée en exerçant une pression sur sa périphérie,
b) la déformation de consigne de chaque pièce d'insert nécessaire pour obtenir une pression de consigne est définie à partir des valeurs ainsi déterminées,
c) la pièce d'insert est montée dans un boîtier extérieur (14) dont les dimensions intérieures correspondent aux dimensions extérieures (D) de la pièce d'insert lors de la déformation de consigne déterminée,
d) une pression prédéterminée agissant vers l'intérieur étant exercée sur chaque pièce d'insert sur la périphérie de celle-ci, et la déformation de consigne étant définie en mesurant la déformation élastique de la pièce d'insert au moins lorsque la pression prédéterminée est atteinte, la pression prédéterminée appliquée étant inférieure à la pression de consigne, et la déformation de consigne étant extrapolée sur la base de la déformation lors de l'application de la pression prédéterminée.

2. Procédé de fabrication de dispositifs conducteurs de gaz d'échappement, en particulier de dispositifs d'épuration de gaz d'échappement, comportant chacun un boîtier extérieur qui présente une pièce d'insert serrée dans celui-ci, **caractérisé par** les étapes suivantes :
a) chaque pièce d'insert est déformée vers l'intérieur de manière prédéterminée en exerçant une pression sur sa périphérie,
b) la déformation de consigne de chaque pièce d'insert nécessaire pour obtenir une pression de consigne est définie à partir des valeurs ainsi déterminées,
c) la pièce d'insert est montée dans un boîtier extérieur (14) dont les dimensions intérieures correspondent aux dimensions extérieures (D) de la pièce d'insert lors de la déformation de consigne déterminée,
d) une déformation prédéterminée étant provoquée sur la pièce d'insert par application d'une pression agissant vers l'intérieur, et la déformation de consigne étant définie en mesurant au moins la pression sur la pièce d'insert nécessaire pour obtenir la déformation prédéterminée, la déformation prédéterminée étant inférieure à la déformation de consigne, et la déformation de consigne étant extrapolée sur la base de la pression exercée lors de la déformation prédéterminée.

3. Procédé selon la revendication 1 ou la revendication 2, **caractérisé en ce qu'**au moins l'un des paramètres suivants est pris en compte lors de l'extrapolation : retour élastique du boîtier, évasement du boîtier, changement de forme du boîtier lors des changements de température, changement de l'effet d'isolement de l'élément de compensation en fonction de la compression.

4. Procédé selon l'une des revendications précédentes, **caractérisé en ce que** la pièce d'insert est une unité préfabriquée qui présente un substrat (10) traversé par du gaz et un élément de compensation élastique entourant le substrat (10) sur sa périphérie.

5. Procédé selon l'une des revendications précédentes, **caractérisé en ce que** le dispositif est un pot catalytique ou un filtre à particules diesel ou une combinaison des deux.

6. Procédé selon l'une des revendications précédentes, **caractérisé en ce que** la pression exercée sur la pièce d'insert est orientée radialement vers l'intérieur.

7. Procédé selon l'une des revendications précédentes, **caractérisé en ce qu'**au moins une, de préférence au moins trois mâchoires de pression (20) sont déplacées par rapport à la pièce d'insert pour exercer la pression souhaitée ou la déformation souhaitée sur la pièce d'insert dans un dispositif de mesure.

8. Procédé selon l'une des revendications précédentes, **caractérisé en ce que** la géométrie du boîtier extérieur (14) est modifiée par commande en déplacement de manière à serrer la pièce d'insert dans le boîtier extérieur (14) avec la pression de consigne.

9. Procédé selon l'une des revendications précédentes, **caractérisé en ce qu'**un boîtier en tôle est utilisé en tant que boîtier extérieur (14).

10. Procédé selon l'une des revendications précédentes, **caractérisé en ce que** le boîtier extérieur (14) est obtenu par enroulement autour de la pièce d'insert.

11. Procédé selon l'une des revendications 1 à 9, **caractérisé en ce que** le boîtier extérieur (14) est pressé contre la pièce d'insert par calibrage.

12. Procédé selon l'une des revendications 1 à 9, **caractérisé en ce que** le boîtier extérieur (14) est composé de plusieurs coquilles (34, 36) qui sont pressées contre la pièce d'insert et sont fixées les unes sur les autres.

13. Procédé selon l'une des revendications 1 à 9, **caractérisé en ce que** la pièce d'insert est poussée dans un boîtier extérieur (14) cylindrique préfabriqué dont les dimensions intérieures correspondent aux dimensions extérieures déterminées de la pièce d'insert.

14. Procédé selon la revendication 13, **caractérisé en ce que** le boîtier extérieur est calibré au diamètre souhaité.

15. Procédé selon l'une des revendications précédentes, **caractérisé en ce que** la pression de consigne exercée sur la pièce d'insert est de 7 bars au maximum, de préférence de 3,9 bars au maximum.
